# EUROPEAN PATENT SPECIFICATION

(11) **EP 3 092 416 B1**
(45) Date of publication and mention of the grant of the patent: **06.03.2019**
(21) Application number: 14878329.3
(22) Date of filing: 17.12.2014
(51) Int. Cl.: F16B 12/10, A47B 47/00, A47B 61/00, A47B 47/04, F16B 12/12, F16B 5/00, F16B 12/46

(54) **METHOD OF ASSEMBLING A PRODUCT**
VERFAHREN ZUM ZUSAMMENSETZEN EINES PRODUKTS
PROCÉDÉ D'ASSEMBLAGE D'UN PRODUIT

(30) Priority: 10.01.2014 SE 1450022; 10.01.2014 SE 1450018; 15.01.2014 SE 1450034; 17.01.2014 SE 1450047; 17.01.2014 US 201414158165
(43) Date of publication of application: 16.11.2016
(73) Proprietor: Välinge Innovation AB, 263 65 Viken (SE)
(72) Inventor: DERELÖV, Peter, S-252 84 Helsingborg (SE); BRÄNNSTRÖM, Hans, S-263 36 Höganäs (SE); PÅLSSON, Agne, deceased (SE)
(74) Representative: Engstrand, Ola
(86) International application number: PCT/SE2014/051523
(87) International publication number: WO 2015/105451

(56) References cited:
- EP-A1- 1 922 954
- WO-A1-2008/150234
- DE-U1-202009 008 825
- FR-A1- 2 517 187
- FR-A5- 2 062 731
- GB-A- 2 482 213
- US-A1- 2012 279 161
- US-B2- 7 998 549

## Description

### Field of the invention

The present invention relates to an assembled product, such as a box or a drawer, a furniture component or a furniture, and a method of assembling the product. The assembled product is provided with a locking device comprising a flexible tongue.

### Technical background

A furniture provided with a mechanical locking system is known in, e.g., WO 2012/154113 (A1). The furniture comprises a first panel connected perpendicular to a second panel by a mechanical locking system comprising a flexible tongue in an insertion groove.

FR2517187 discloses a method of assembling at least three panels to form a furniture structure.

GB 2482213 discloses a method for constructing wall-hanging or free standing cabinets by connecting at least three panels mutually perpendicular.

### Summary of the invention

It is an object of certain embodiments of the present invention to provide an improvement over the above described techniques and known art. A specific objective is to improve the method for assembling a furniture product.

According to the invention is a method of assembling a set of panels to obtain an assembled product, the method comprising:
- arranging a first panel, with a first main plane, perpendicular to a second panel with a second main plane, wherein the first main plane is perpendicular to the second main plane,
- connecting by hand a first edge of the first panel to a first edge of the second panel, by linearly displacing the first panel and/or the second panel;
- arranging a third panel, with a third main plane, perpendicular to the first and the second panel, wherein the third main plane is perpendicular to the first and the second main plane; and
- connecting by hand a second edge of the third panel to a second edge of the second panel, by linearly displacing the third panel and/or second panel.
connecting by hand a first edge of the third panel to a second edge of the first panel, by linearly displacing the third panel and/or the first panel.
- wherein each linear displacement is executed in a direction parallel to the third main plane, and
- each connecting comprises displacing a part of a flexible tongue of a locking device into a tongue groove for locking an edge and an adjacent edge together.

The method may further comprise the steps of arranging a fourth panel, with a fourth main plane, perpendicular to the first and the third panel, wherein the fourth main plane is parallel to the second main plane, and connecting by hand a first edge of a fourth panel to a third edge of the first panel, by linearly displacing the fourth panel and/or the first panel.

The method may further comprise the step of connecting by hand a third edge of the third panel to a second edge of the fourth panel, by linearly displacing the third panel and/or the fourth panel.

The method may further comprise the steps of arranging a fifth panel, with a fifth main plane, perpendicular to the third and the fourth panel, wherein the fifth main plane is parallel to the first main plane, and connecting by hand a first edge of the fifth panel to a third edge of the second panel, and a third edge of a fifth panel to a third edge of the fourth panel, by linearly displacing the fifth panel and/or the second and the fourth panel.

The set of panels may comprise at least five panels, wherein each connecting step comprises linearly displacing of one of the five panels.

Each linear displacement may be executed in a direction parallel to the third main plane.

Each connecting step may comprise a displacement of a part of a flexible tongue of a locking device, wherein a part of the flexible tongue is displaced into a tongue groove for locking an edge to an adjacent edge.

Each connecting step may comprise connecting two panels such that the panels are mechanically locked together in directions perpendicular to the main plane of each of the two connected panels.

The panels may be of plastic or wood fiber. For example, the panels may be wood fibre based boards, e.g. HDF boards, particleboard or solid wood board, or plastic panels. The panels may be provided with a decorative layer.

The assembled product may be a furniture component or a furniture, such as a drawer, a cupboard, bookshelves, a wardrobe, a kitchen fixture, or a box for storing or transporting.

Said linear displacement during connection of any edge of any of the first, the second, the third, the fourth or the fifth panel, may alternatively be an essential linear displacement.

### Brief description of the drawings

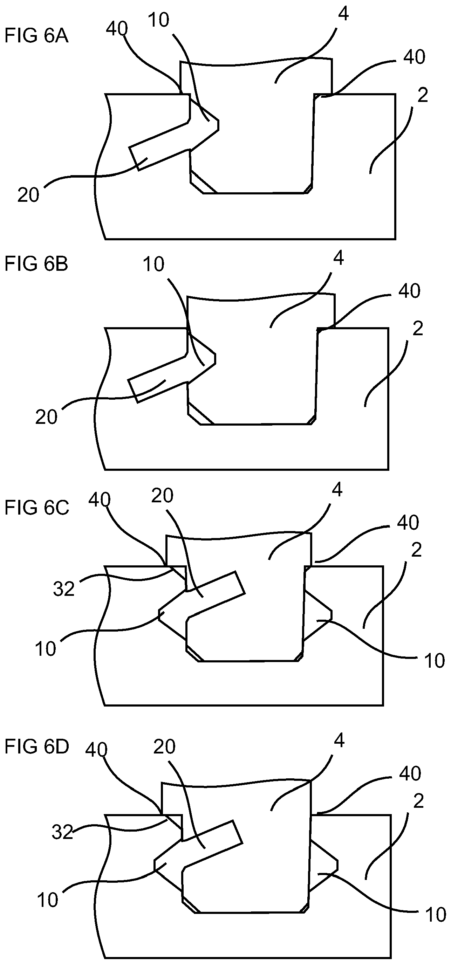

The present invention will by way of example be described in more detail with reference to the appended schematic drawings 1-5, 7A, 9 and 10, which shows embodiments of the present invention, whereas figures 6A-6D, 7B, 7C, 8A-8C and 11A-11H show illustrative examples of another connection systems, which do not form part of the present invention.
FIGS 1A-B show embodiments of a locking device for a furniture
FIGS. 2A-C show a furniture component or a furniture
FIGS 3A-B show a furniture component or a furniture
FIG 4A shows a method of assembling a furniture component or a furniture
FIG 4B shows a corner section of a furniture component or a furniture
FIG 5 shows a partly assembled furniture or furniture component
FIGS 6A-D a locking device for a furniture
FIG 7A shows a locking device for a fumiture
FIGS 7B-C a locking device for a furniture and a disassembling tool
FIGS 7D-E a locking device provided with a disassembling recess and a disassembling tool
FIG 8A-C a mechanical locking system for a back or a bottom panel
FIG 9 shows a locking device for an assembled product
FIG 10A shows a locking device for locking a back or a bottom panel to a frame
FIG 10B shows a locking device for locking a shelf to a frame
FIG 11A-H show flexible tongues

### Detailed description

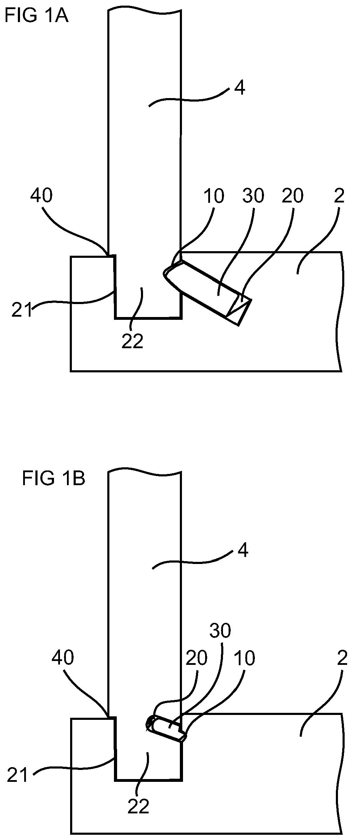

An embodiment of a locking device for locking a panel 4 to an adjacent panel 2 is shown in FIGS 1A-B. The panel and the adjacent panel may be panels of a furniture that are connected perpendicular to each other, i.e. with a main surface of the panel perpendicular to a main surface of the adjacent panel. An edge section 22 of the panel 4 is arranged in an edge section groove 21 of the adjacent panel 2 for locking the panel and the adjacent panel together in a first direction. The embodiment in FIG 1A comprises a flexible tongue 30 arranged in an insertion groove 20 in the edge section groove 21 and a tongue groove 10 at the edge section 22. The embodiment in FIG 1B comprises a flexible tongue 30 arranged in an insertion groove 20 at the edge section 22 and a tongue groove in the edge section groove. The flexible tongue 30 and the tongue groove 10 cooperate for locking the panel and the adjacent panel together in a second direction, which is essentially perpendicular to the first direction. The flexible tongue is during assembling, of the panel and the adjacent panel, pushed into the insertion groove when the edge section is inserted into the edge section groove. The flexible tongue springs back and into the tongue groove when the panel and the adjacent panel have reached a connected state.

The panel may be a back piece of a bookshelves or a wardrobe and the adjacent panel may be a board of the frame. The panel may also be a bottom panel of a drawer and the adjacent panel a board of the frame. Furthermore the panel and the adjacent panel may be a first and a second board respectively of a frame of a bookshelves, a wardrobe or a drawer. The back piece and the bottom may be a HDF board or a particleboard with a thickness of about 2-4 mm. Embodiments of the invention may comprise one or more of the locking devices described above.

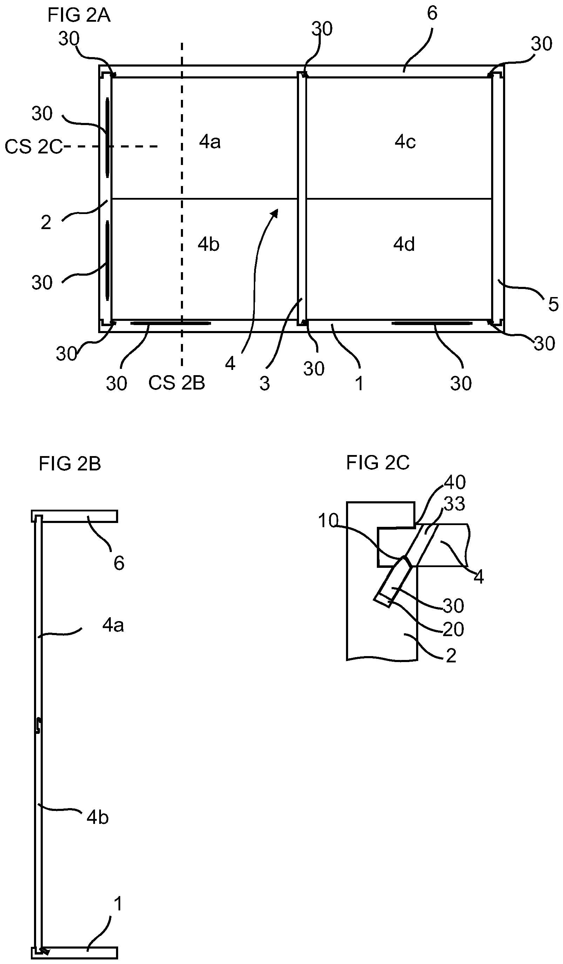

FIG 2A shows a furniture, such as a bookshelves, comprising eight of the locking devices, arranged with a side of the frame facing downwards. The furniture comprises a first panel 1, e.g. a side of the bookshelves, connected at a first edge to a first edge of a second panel 2, e.g. the top of the bookshelves, by one of the locking devices. A first edge of a third panel 4, e.g. a rectangular back piece of the bookshelves, is connected to a second edge of the second panel by another of the locking devices. A second edge of the third panel 4 is connected to second edge of the first panel by another of said locking devices. A first edge of a fourth panel 5, e.g. a bottom of the bookshelves, is connected to a third edge of the first panel by another of said locking devices. An edge section of a third edge of the third panel 4 may be arranged in an edge section groove at a second edge of the fourth panel 5. A first edge of a fifth panel 6, e.g. a side of the bookshelves, is connected to a third edge of the fourth panel 5, by another of said locking devices, and a third edge of the fifth panel is connected to a third edge of the second panel, by another of said locking devices. An edge section of a fourth edge of the third panel 4 may be arranged in an edge section groove at a second edge of the fifth panel 5. The locking device at the first and the second edge respectively of the third panel may each comprise two or more flexible tongues 30. A sixth panel 3, e.g. a shelf of the bookshelves, which is arranged parallel to the first and the fourth panel, is connected, by another of the locking devices, at a first edge to the first to the first panel, and a third edge is connected, by another of the locking devices, to the fifth panel. The flexible tongue of the locking device at the first and third edge, respectively, of the sixth panel is preferably arranged at the edge section 22.

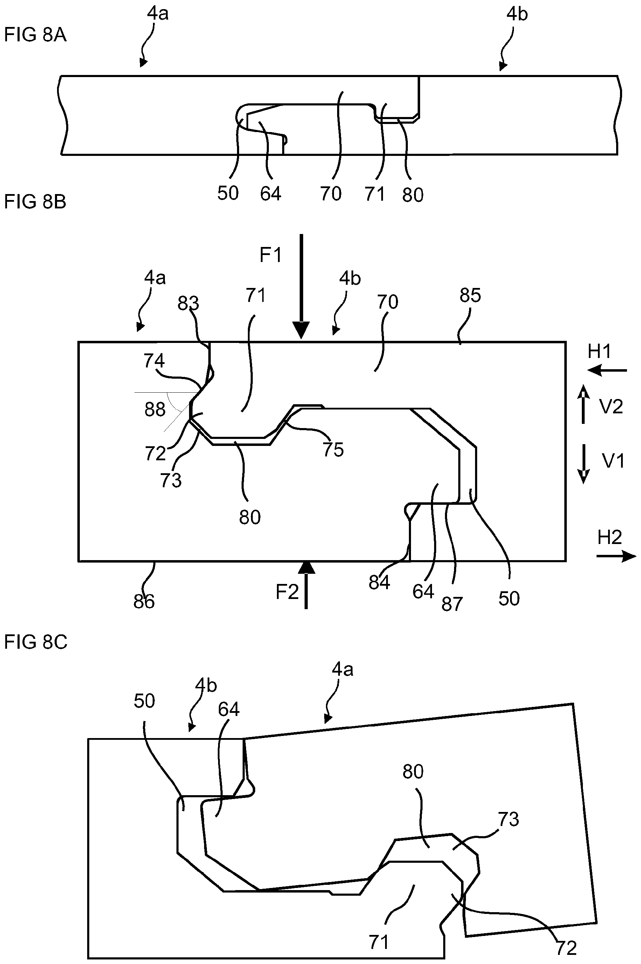

FIG 2B shows a cross section CS 2B of the first panel 1, the third panel 4 and the fifth panel 6. The figure shows that an edge section of the fourth edge of the third panel may be arranged in edge section groove at the second edge of the fifth panel 6. The third panel 4 may comprise two or more boards 4a-4d locked by a mechanical locking system. Embodiments of the mechanical locking system are shown in FIGS 8A-C. A second edge of the fifth panel may be provided with another of the locking devices (not shown) for connecting adjacent edges of adjacent boards.

FIG 2C shows a cross section CS 2C of the second and third panel 2, 4. The third panel is in this embodiment provided with a dismantling groove 33 adapted for insertion of a dismantling tool, which pushes the flexible tongue into the insertion groove, which facilitates dismantling of the second and third panel.

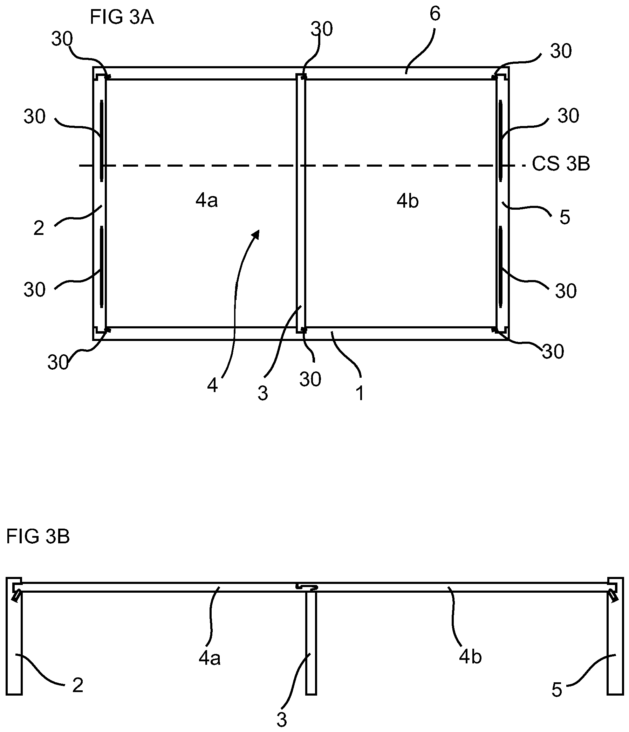

FIG 3A shows a furniture, such as a bookshelves, comprising eight of the locking devices, arranged with a side of the frame facing downwards. The furniture comprises a first panel 1, e.g. a side of the bookshelves, connected at a first edge to a first edge of a second panel 2, e.g. the top of the bookshelves, by one of the locking devices. A first edge of a third panel 4, e.g. a rectangular back piece of the bookshelves, is connected to a second edge of the second panel by another of the locking devices. An edge section of a second edge of the third panel 4 may be inserted into an edge section groove of a second edge of the first panel. A first edge of a fourth panel 5, e.g. a bottom of the bookshelves, is connected to a third edge of the first panel by another of said locking devices. A third edge of the third panel 4 is connected to a second edge of the fourth panel 5 by another of said locking devices. A first edge of a fifth panel 6, e.g. a side of the bookshelves, is connected to a third edge of the fourth panel 5, by another of said locking devices, and a third edge of the fifth panel is connected to a third edge of the second panel, by another of said locking devices. An edge section of a fourth edge of the third panel 4 may be arranged in an edge section groove at a second edge of the fifth panel 5. The locking device at the first and the third edge respectively of the third panel may each comprise two or more flexible tongues 30. A sixth panel 3, e.g. a shelf of the bookshelves, which is arranged parallel to the first and the fourth panel, is connected, by another of the locking devices, at a first edge to the first to the first panel, and a third edge is connected, by another of the locking devices, to the fifth panel. The flexible tongue of the locking device at the first and third edge, respectively, of the sixth panel is preferably arranged at the edge section 22. The third panel is preferably connected slideable at the first and the third edge in order to facilitate disassembling.

FIG 3B shows a cross section CS 3B of the first panel 1, the third panel 4 and the fifth panel 6. The third panel 4 may comprise two or more boards 4a-b locked by the mechanical locking system described above.

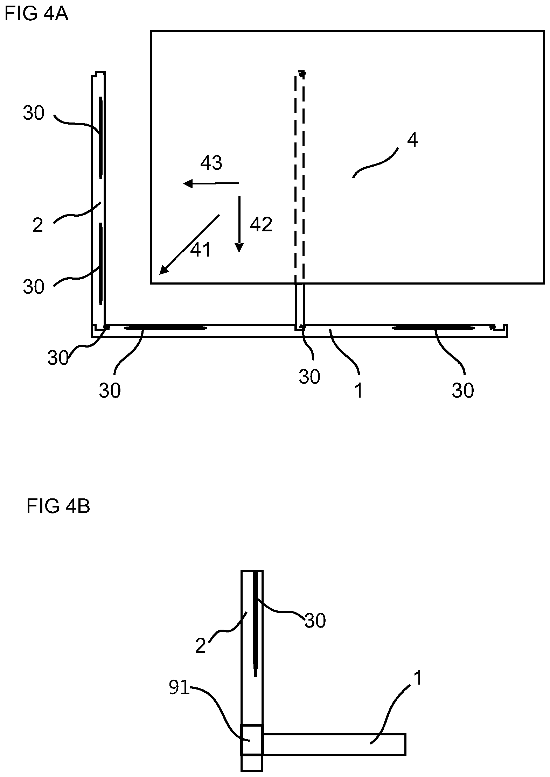

FIG 4A shows an embodiment of a method for assembling the assembled product described under FIG 2A-C. The first, second and sixth panel 1, 2, 3 are preferably connected to each other before the third panel is connected. The third panel may be displaced in a diagonal direction 41 such that the first and the second edge of the third panel is connected at the same time to the second edge of the first panel and to the second edge of the second panel.

Each linear displacement is preferably executed in a direction parallel to the third main plane.

The first edge of the third panel 4 is in this alternative connected displaceable at the first edge. Another alternative is to displace the third panel in the second direction 43 perpendicular to the second panel and subsequently displace the third panel in the first direction 43 perpendicular to the first panel. The second edge of the third panel 4 is in this embodiment connected displaceable at the second edge.

FIG 4B shows that a corner section between e.g. the first and the second panel may be provided with a cover plate, in order to hide the locking device.

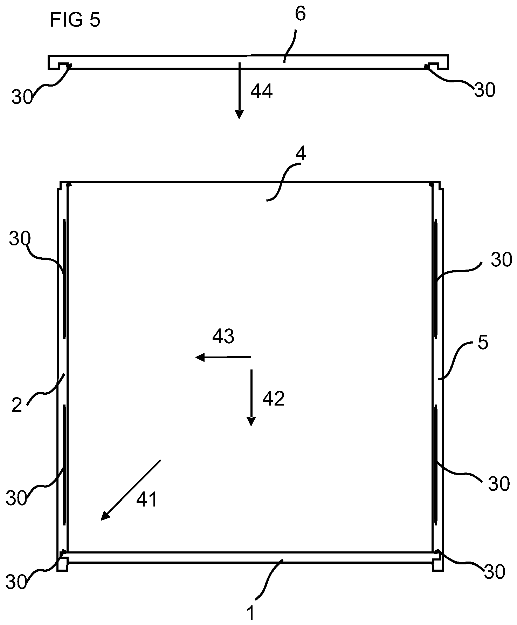

FIG 5 shows a furniture, such as a drawer, comprising six of the locking devices, arranged with a side of the frame facing downwards. The furniture comprises a first panel 1, e.g. an inner side of the drawer, connected at a first edge to a first edge of a second panel 2, e.g. a side of the drawer, by one of the locking devices. A first edge of a third panel 4, e.g. a rectangular bottom of the drawer, is connected to a second edge of the second panel by another of the locking devices. An edge section of a second edge of the third panel 4 may be inserted into an edge section groove of a second edge of the first panel. A first edge of a fourth panel 5, e.g. a side of the drawer, is connected to a third edge of the first panel by another of said locking devices. A third edge of the third panel 4 is connected to a second edge of the fourth panel 5 by another of said locking devices. A first edge of a fifth panel 6, e.g. a front panel of the drawer, is subsequently connected to a third edge of the fourth panel 5, by another of said locking devices, and a third edge of the fifth panel is connected to a third edge of the second panel, by another of said locking devices. An edge section of a fourth edge of the third panel 4 may be arranged in an edge section groove at a second edge of the fifth panel 5. The locking device at the first and the third edge respectively of the third panel may each comprise two or more flexible tongues 30. The third panel is preferably connected slideable at the first and the third edge in order to facilitate disassembling.

FIGS 6A-B show alternative of the locking device. Embodiments are shown with a calibrating groove 40 at one or two sides of the edge section. The tongue groove 10 may be symmetric such that the same dismantling tool can be used at opposite positions of the locking device, i.e. mirror inverted locking devices. The edge section groove may be provided with a guiding surface 32 that facilitates insertion of the edge section into the edge section groove. The edge section groove may be provided with two opposite tongue grooves 10. Two opposite tongue grooves may be easily made by an end cutter, by e.g. a craftsman on site.

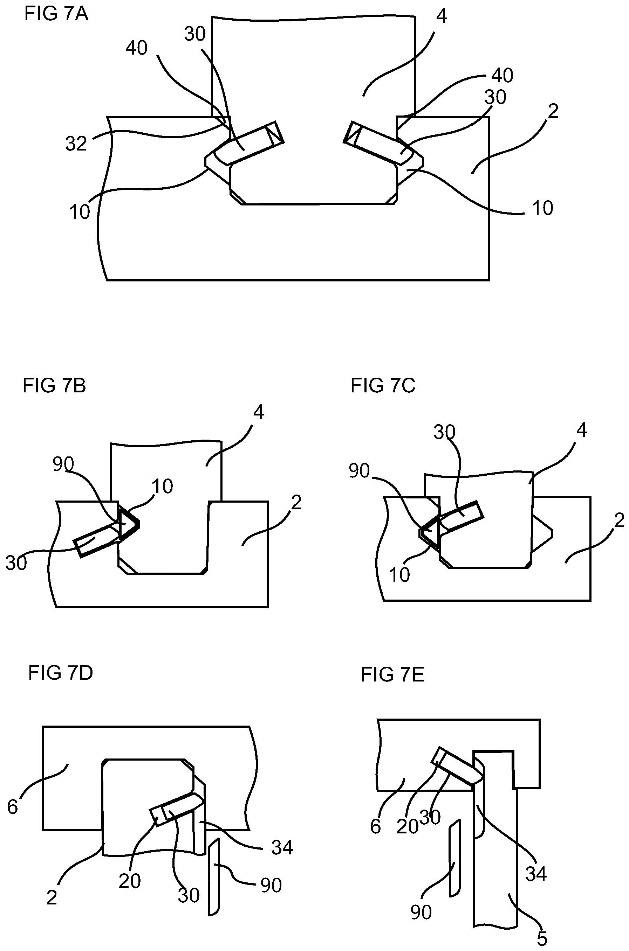

FIG 7A shows that the embodiment with two opposite tongue grooves 10 may be provided with two flexible tongues 30.

FIG 7B-C show disassembling of the locking device by inserting a symmetric dismantling tool 90 into a symmetric tongue groove 10.

FIG 7D-E show alternative embodiments provided with a dismantling recess 34. These embodiments may be an alternative to the embodiment shown in FIG 2C, if for example it is desired to un-lock the locking device from the inside of a furniture, such as a drawer, a box or a book. These embodiments may also be used to connect the fifth panel to the second and fourth panel in the embodiment shown in FIG 5A. The tongue 30 is arranged in the edges section groove in FIG 7B and at the edge section in FIG 7E. The edge section is provided with a dismantling groove 34 which adapted to a dismantling tool 90. The tongue 30 is pushed back into the displacement groove 20, and un-lock the locking device, when the dismantling tool is inserted into the dismantling recess. The dismantling recess may be covered by a covering plate (not shown). The embodiments with the dismantling groove or recess are particular advantageous for embodiment which do not have tongue groove which is accessible from an outer end of the tongue groove for insertion of a dismantling tool. However, the embodiments with the dismantling groove or recess may be used to connect any adjacent panels in order to facilitate disassembling.

FIG 8A shows an embodiment of the mechanical locking system comprising a tongue 64 at a first edge of a first board that cooperates with a tongue groove 50 at a second edge of a second board for locking the first and the second board in a first direction. Furthermore, the locking system comprises a protruding strip 70 with a locking panel 71 at the second edge. The locking panel 71 cooperates with a locking groove 80 at the first edge for locking the first and the second board in a second direction, which is perpendicular to the first direction. The boards and the locking system is preferably arranged in the assembled product, with the locking strip facing the direction that is to be loaded. The locking system may remain locked if arranged in this way.

FIG 8B shows another embodiment of a panel, such as a back or bottom panel, comprising a first 8a and a second board 8b provided with a mechanical locking system configured to lock the first 4a and the second board 4b together.

The first main plane of the first board is essentially parallel to a second main plane of the second board, wherein the panel comprises a first face 85 and an opposite second face 86 which are parallel to a main plane of the panel, The mechanical locking system comprising:
a first tongue 64 provided at a first edge of the first board 8a, wherein the first tongue is configured to cooperate with a first tongue groove 50 provided at a second edge of the second board 8b for locking together the first and the second panel in a first vertical direction V1;
a second tongue 72 at the second edge of the second board 8b, wherein the second tongue is configured to cooperate with a second tongue groove 73 at the first edge of the first panel 8a for locking together the first and the second panel in a second vertical direction V2;
a first pair of locking surfaces 83 provided at the first face for locking together the first board 8a and the second board 8b in a first horizontal direction H1; and
second pair of locking surfaces 84 provided at the second face for locking together the first board 8a and the second board (8b in a second horizontal direction H2.

The first pair of locking surfaces 83 are preferably essentially vertical. The second pair of locking surfaces 84 are also preferably essentially vertical.

The first tongue 64 and the first tongue groove 50 cooperate at a third pair of locking surfaces 87 that are preferably arranged essentially horizontally.

The second tongue 72 and the second tongue groove 73 cooperate at a fourth pair of locking surfaces 74 that are preferably arranged at an angle 88 to the main plane of the panel that is greater than zero. The angle 88 is elected to allow the first board to be locked to the second board by an angling motion of the first panel, wherein the first tongue 64 is inserted in the first tongue groove 50, as is shown in FIG 8C.

The first face 85 is arranged upwards, or in the direction were the greatest load F1 is likely to be applied, to prevent that the first and the second board are unlocked by a reversed angling motion.

The second face 86 is arranged downwards, or in the direction were the smallest load F2 is likely to be applied on the panel. The second tongue and the tongue groove may provide a resistance for unlocking of the first and the second board by a reversed angling motion.

The angle 88 may be in the range of about 30° to about 60°. The angle is preferably about 45°.

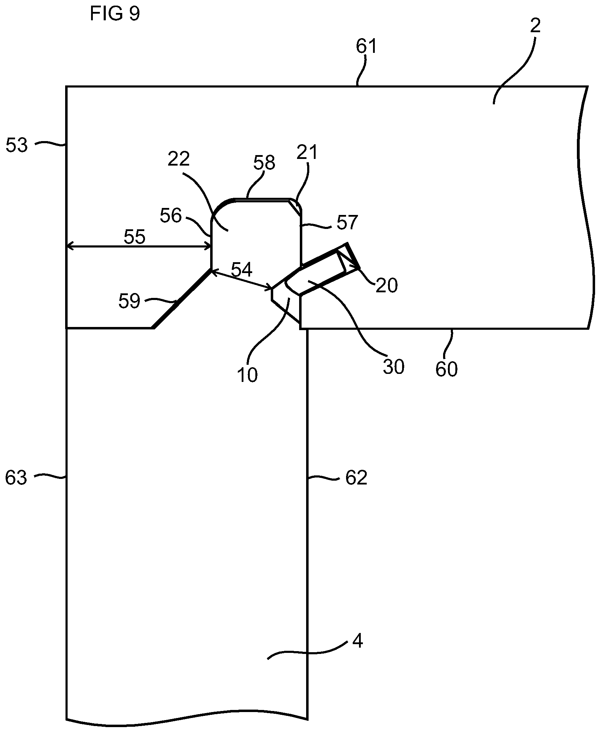

FIG 9 shows a preferred embodiment of the locking device for locking together a panel and an adjacent panel of the frame panels 1, 2, 4, 5. The locking device comprises a first thickness 55 of a core material, between an edge section groove 21 and a first edge. The first thickness is greater than a minimum second thickness 54 of a core material of an edge section 22. The ratio between the first thickness 55 and the minimum second thickness 54 may be at least about 1,25; preferably at least about 1,5; and more preferably at least about 2. A preferred ratio between the first thickness 55 and the minimum second thickness 54 is in the range of about 1,1 to about 3.

An embodiment comprises an edge section groove 21 that comprises a first wall 56 and a second wall 57, wherein the first wall is closer to the an edge of the panel than the second wall. The first thickness 55 is preferably measured between the first wall 56 and the first edge 53. The first and the second walls 56, 57 are preferably connected by a bottom wall 58.

The edge section 22 may comprise a first wall and an opposite second wall, wherein the tongue groove 10 is provided in the first wall. The minimum second thickness 54 may be measured between a bottom of the tongue groove and the second wall.

An embodiment of the insertion groove 20 that extends along essentially the entire length of the edge section groove of first edge may lead to an easier production. An embodiment of the tongue groove 10 that extends along essentially the entire length of the edge section of the second edge may also lead to an easier production.

The edge 53 of the panel 2 is in a preferred embodiment provided essentially in the same plane as an outer face 63 of the adjacent second panel 4.

An edge of the opening of the edge section groove may be provided with a bevel 59 or rounding in order to facilitate the insertion of a flexible tongue 30 into the insertion groove 20.

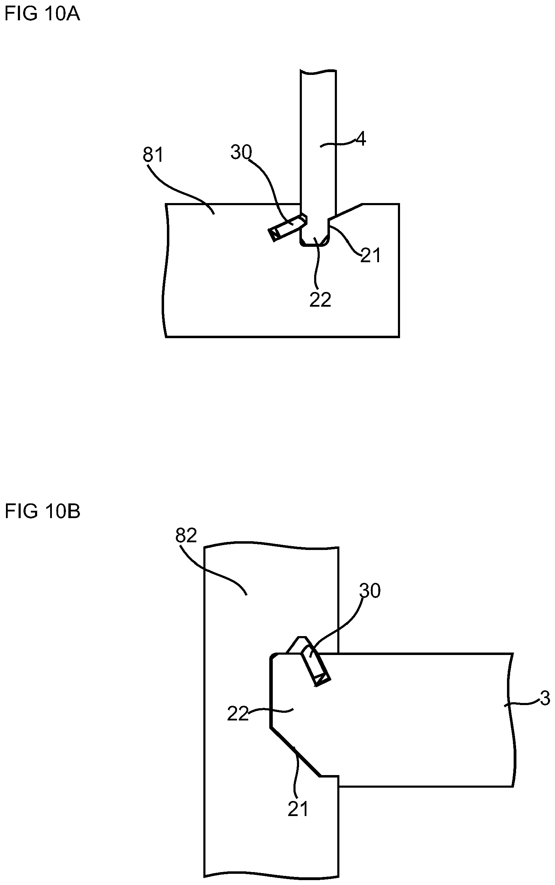

FIG 10A shows an embodiment of a locking device for locking the third panel 4, such as a back piece or a bottom panel, to any back or bottom edge 81 of the frame. An embodiment of the frame is shown in FIG 2A, 3A and 5.

FIG 10B shows an embodiment of a locking device for locking the sixth panel 3, such as a shelf, to any panel 82 of the frame. A first edge of the sixth panel may be connected to the frame by linear displacement and/or an angling motion. An embodiment of the frame is shown in FIG 2A and FIG 3A.

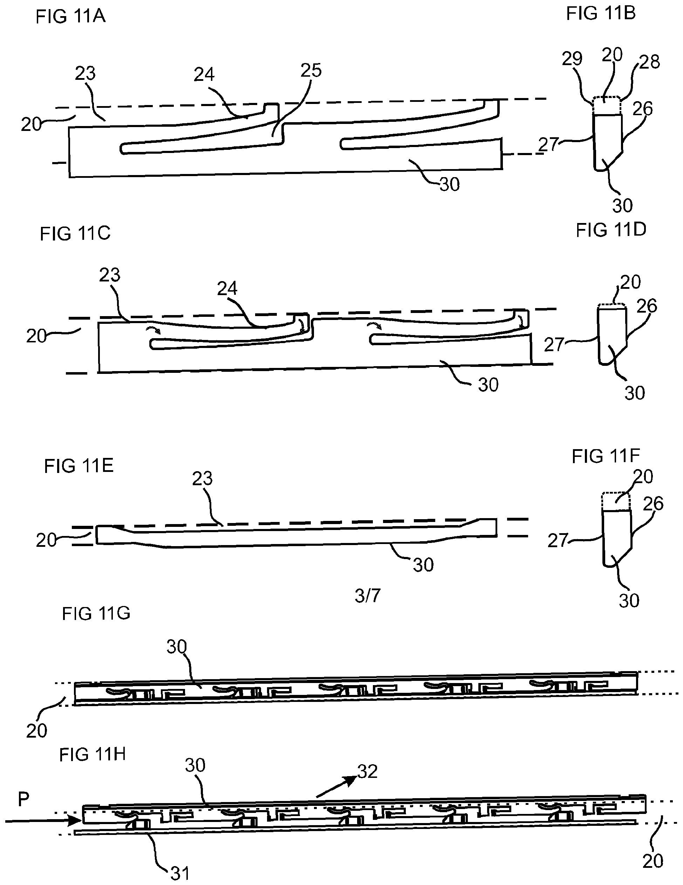

An embodiment of the flexible tongue 30, which is displaceable in an insertion groove 20, is shown in FIGS 11A-11D. FIGS 11A-B show the flexible tongue in a locked potion and FIGS 11C-D show the flexible tongue during assembling of the a panel and an adjacent panel. FIG 11B shows a cross section of the flexible tongue in FIG 11A. FIG 11D shows a cross section of the flexile tongue in FIG 11C. The flexible tongue comprises bendable protruding parts 24. A space 23 is provided between the tongue and a bottom wall of the insertion groove 20. FIG 11C shows that the flexible tongue is pushed into the insertion groove 20 and towards the bottom wall during the assembling of the panel. The tongue springs back when the first and the second panel have reached a locked position. A recess 25 is preferably arranged at each bendable protruding part.

The flexible tongue may have a first displacement surface 26 and a opposite second displacement surface 27, configured to be displaced along a third and a fourth displacement surface 28, 29, respectively, of the insertion groove 20.

An alternative embodiment of the flexible tongue 30, without the protruding bendable parts, is shown in FIG 11E-F. FIG 11F shows a cross section of the tongue in FIG 11E. The alternative embodiment is bendable in its length direction in order to accomplish the same function as the embodiment shown in FIG 11A-D.

A further embodiment of the flexible tongue 30 is shown in FIG 11G-H. FIG 11G shows the flexible tongue 30 before the panel and the adjacent panel are locked together by the flexible tongue. The flexible tongue comprises an inner part 31 provided with wedge elements and an outer part for the locking together the panel and the adjacent panel by the flexible tongue. The locking is obtained by applying a force P, in a direction parallel to the first edge, at a short edge of the outer part. The force displaces the outer tongue part in the direction parallel to the edge of the panel and the wedges force the outer tongue part in a perpendicular direction, out of the insertion groove 20. The resulting displacement 32 of the outer part of the flexible tongue is therefore in a direction between the direction parallel to the first edge and the perpendicular direction.

## Claims

1. A method of assembling a set of panels to obtain an assembled furniture component or a furniture, such as a drawer, a cupboard, bookshelves, a wardrobe, a kitchen fixture, the method comprising:
• arranging a first panel (1), with a first main plane, perpendicular to a second panel (2) with a second main plane, wherein the first main plane is perpendicular to the second main plane;
• connecting by hand a first edge of the first panel (1) to a first edge of the second panel, by linearly displacing the first panel and/or the second panel;
• arranging a third panel (4), with a third main plane, perpendicular to the first and the second panel, wherein the third main plane is perpendicular to the first and the second main plane;
• connecting by hand a second edge of the third panel (4) to a second edge of the second panel, by linear displacing (43) the third panel (4) and/or second panel (2),
• connecting by hand a first edge of the third panel (4) to a second edge of the first panel (1), by linearly displacing (42) the third panel and/or the first panel (1),
• wherein each linear displacement is executed in a direction parallel to the third main plane, **characterised in that**
• each connecting comprises displacing a part of a flexible tongue (30) of a locking device into a tongue groove for locking an edge and an adjacent edge together.

2. The method as claimed in claim 1, comprising arranging a fourth panel (5), with a fourth main plane, perpendicular to the first and the third panel, wherein the fourth main plane is parallel to the second main plane, and connecting by hand a first edge of a fourth panel (5) to a third edge of the first panel (1), by linearly displacing the fourth panel (5) and/or the first panel (1).

3. The method as claimed in claim 2, comprising connecting by hand a third edge of the third panel (3) to a second edge of the fourth panel (5), by linearly displacing (42) the third panel and/or the fourth panel (5).

4. The method as claimed in claim 2 or 3, comprising arranging a fifth panel (6), with a fifth main plane, perpendicular to the third and the fourth panel, wherein the fifth main plane is parallel to the first main plane, and connecting by hand a first edge of the fifth panel to a third edge of the second panel, and a third edge of a fifth panel to a third edge of the fourth panel, by linearly displacing the fifth panel (44) and/or the second and the fourth panel.

5. The method as claimed in anyone of the preceding claims, wherein the set of panels comprises at least five panels, wherein each connecting step comprises linearly displacing of one of the five panels.

## Patentansprüche

1. Verfahren zum zusammenbauen eines Satzes von Platten, um ein zusammengebautes Möbelteil oder ein Möbelstück, wie beispielsweise eine Schublade, einen Schrank, Bücherregale, eine Garderobe, einen Kücheneinbau, herzustellen, wobei das Verfahren umfasst:
• Anordnen einer ersten Platte (1) mit einer ersten Hauptebene senkrecht zu einer zweiten Platte (2) mit einer zweiten Hauptebene, wobei die erste Hauptebene senkrecht zu der zweiten Hauptebene ist;
• manuelles Verbinden einer ersten Kante der ersten Platte (1) mit einer ersten Kante der zweiten Platte durch lineares Verschieben der ersten Platte und/oder der zweiten Platte;
• Anordnen einer dritten Platte (4) mit einer dritten Hauptebene senkrecht zu der ersten und der zweiten Platte, wobei die dritte Hauptebene senkrecht zu der ersten und der zweiten Hauptebene ist;
• manuelles Verbinden einer zweiten Kante der dritten Platte (4) mit einer zweiten Kante der zweiten Platte durch lineares Verschieben (43) der dritten Platte (4) und/oder der zweiten Platte(2),
• manuelles Verbinden einer ersten Kante der dritten Platte (4) mit einer zweiten Kante der ersten Platte (1) durch lineares Verschieben (42) der dritten Platte und/oder der ersten Platte (1),
• wobei jede lineare Verschiebung in einer Richtung parallel zu der dritten Hauptebene ausgeführt wird,
**dadurch gekennzeichnet, dass**
• jedes Verbinden umfasst, dass ein Teil einer flexiblen Feder (30) einer Verriegelungseinrichtung in eine Feder-Nut hinein verschoben wird, um eine Kante und eine angrenzende Kante miteinander zu verriegeln.

2. Verfahren nach Anspruch 1, das umfasst, dass eine vierte Platte (5) mit einer vierten Hauptebene senkrecht zu der ersten und der dritten Platte angeordnet wird, wobei die vierte Hauptebene parallel zu der zweiten Hauptebene ist, und eine erste Kante einer vierten Platte (5) manuell mit einer dritten Kante der ersten Platte (1) verbunden wird, indem die vierte Platte (5) und/oder die erste Platte (1) linear verschoben werden/wird.

3. Verfahren nach Anspruch 2, das manuelles Verbinden einer dritten Kante der dritten Platte (3) mit einer zweiten Kante der vierten Platte (5) durch lineares Verschieben (42) der dritten Platte und/oder der vierten Platte (5) umfasst.

4. Verfahren nach Anspruch 2 oder 3, das umfasst, dass eine fünfte Platte (6) mit einer fünften Hauptebene senkrecht zu der dritten und der vierten Platte angeordnet wird, wobei die fünfte Hauptebene parallel zu der ersten Hauptebene ist, und manuell eine erste Kante der fünften Platte mit einer dritten Kante der zweiten Platte und eine dritte Kante einer fünften Platte mit einer dritten Kante der vierten Platte verbunden werden, indem die fünfte Platte (44) und/oder die zweite und die vierte Platte linear verschoben werden/wird.

5. Verfahren nach einem der vorangehenden Ansprüche, wobei der Satz von Platten wenigstens fünf Platten umfasst und jeder Verbindungs-Schritt lineares Verschieben einer der fünf Platten umfasst.

## Revendications

1. Procédé d'assemblage d'un jeu de panneaux pour obtenir un composant de meuble assemblé ou un meuble, tel qu'un tiroir, un placard, une étagère, une armoire, un meuble de cuisine, le procédé comprenant les étapes consistant à :
• agencer un premier panneau (1), avec un premier plan principal, perpendiculaire à un deuxième panneau (2) avec un deuxième plan principal, dans lequel le premier plan principal est perpendiculaire au deuxième plan principal ;
• raccorder, à la main, un premier bord du premier panneau (1) à un premier bord du deuxième panneau, en déplaçant de manière linéaire le premier panneau et/ou le deuxième panneau ;
• agencer un troisième panneau (4) avec un troisième plan principal, perpendiculaire au premier et au deuxième panneau, dans lequel le troisième plan principal est perpendiculaire au premier et au deuxième plan principal ;
• raccorder, à la main, un deuxième bord du troisième panneau (4) à un deuxième bord du deuxième panneau, en déplaçant (43) de manière linéaire, le troisième panneau (4) et/ou le deuxième panneau (2),
• raccorder, à la main, un premier bord du troisième panneau (4) à un deuxième bord du premier panneau (1), en déplaçant (42), de manière linéaire, le troisième panneau et/ou le premier panneau (1),
• dans lequel chaque déplacement linéaire est exécuté dans une direction parallèle au troisième plan principal, **caractérisé en ce que** :
• chaque raccordement comprend le déplacement d'une partie d'une languette flexible (30) d'un dispositif de blocage dans une rainure de languette pour bloquer un bord et un bord adjacent ensemble.

2. Procédé selon la revendication 1, comprenant l'étape consistant à agencer un quatrième panneau (5) avec un quatrième plan principal, perpendiculaire au premier et au troisième panneau, dans lequel le quatrième plan principal est parallèle au deuxième plan principal, et raccorder, à la main, un premier bord d'un quatrième panneau (5) à un troisième bord du premier panneau (1), en déplaçant de manière linéaire le quatrième panneau (5) et/ou le premier panneau (1).

3. Procédé selon la revendication 2, comprenant l'étape consistant à raccorder, à la main, un troisième bord du troisième panneau (3) à un deuxième bord du quatrième panneau (5), en déplaçant (42) de manière linéaire le troisième panneau et/ou le quatrième panneau (5).

4. Procédé selon la revendication 2 ou 3, comprenant l'étape consistant à agencer un cinquième panneau (6) avec un cinquième plan principal, perpendiculaire au troisième et au quatrième panneau, dans lequel le cinquième plan principal est parallèle au premier plan principal, et raccorder, à la main, un premier bord du cinquième panneau à un troisième bord du deuxième panneau, et un troisième bord du cinquième panneau à un troisième bord du quatrième panneau, en déplaçant de manière linéaire le cinquième panneau (44) et/ou le deuxième et le quatrième panneau.

5. Procédé selon l'une quelconque des revendications précédentes, dans lequel le jeu de panneaux comprend au moins cinq panneaux, dans lequel chaque étape de raccordement comprend l'étape consistant à déplacer, de manière linéaire, l'un des cinq panneaux.
